Europäisches Patentamt

European Patent Office

Office européen des brevets

(19)

(11) **EP 1 564 709 A2**

## (12) EUROPEAN PATENT APPLICATION

(43) Date of publication:
**17.08.2005 Bulletin 2005/33**

(51) Int Cl.7: **G09G 3/30**, G01R 19/00

(21) Application number: **05250236.6**

(22) Date of filing: **18.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **10.02.2004 JP 2004034031**
**03.03.2004 JP 2004059571**

(71) Applicant: **Fuji Photo Film Co., Ltd.**
**Kanagawa (JP)**

(72) Inventor: **Hayashi, Junji**
**Asaka-shi Saitame (JP)**

(74) Representative: **Stevens, Jason Paul**
**Frank B. Dehn & Co.**
**179 Queen Victoria Street**
**London EC4V 4EL (GB)**

## (54) A method for measuring forward voltage drop

(57) An optical fixing device (16) is provided with a light emitting element array that consists of a plural number of LEDs (21) connected in a matrix. The LEDs are connected in serial to each other in each column, and the LED columns (L1 to Ln) are connected in parallel to each other. Transistors (Tr1 to Trn) are connected in serial to the LED columns (L1 to Ln) respectively, so as to turn the associated LED columns ON or OFF. A capacitor (50) is connected in parallel to the LED columns. After the capacitor is charged by turning a switch (Sb) ON, selected one of the LED columns is turned ON, to discharge the capacitor through the selected LED column. Based on a voltage across the capacitor at the completion of discharging, a forward voltage VFL across the selected LED column is measured.

FIG.4

EP 1 564 709 A2

**Description**

FIELD OF THE INVENTION

The present invention relates to a method of and an apparatus for measuring a forward voltage drop across a light emitting element, a light source apparatus, and a direct thermal printer using the light source apparatus.

BACKGROUND ARTS

A light source apparatus with an LED array consisting of many number of light emitting elements, typically light emitting diodes (LED), is known for example from Japanese Laid-open Patent Application No. 2003-332624. Such a light source apparatus is used for many applications, like an illumination device or a display device.

The LED array is a matrix array constituted of LEDs of M-rows and N-columns, wherein a plural number "M" of LEDs are connected in serial to each other within one column, and a plural number "N" of columns are connected in parallel to each other. In addition, a switching transistor is connected in serial to each individual column, so the light emitting elements can be turned on and off in the unit of one column.

When an electric current flows through the LED in a forward direction, i.e. from its anode to cathode, a voltage drop occurs. So the voltage drop is called a forward voltage drop, and is hereinafter designated by VF. A forward voltage drop across one column, hereinafter designated by VFL, is equal to the total of forward voltage drop values across the individual elements of that LED column. If a voltage applied across one LED column is less than the forward voltage drop values VFL of that column, the LEDs of that column are not turned on. Therefore, a drive voltage VLED is preset at a higher level than the VFL value. Concretely, the drive voltage VLED is defined as a value obtained by adding up an average value a number of times, wherein the average value is an average voltage drop $VF_{AVE}$ of one LED plus a margin for considering variations between individual LEDs, and the number of time is equal to the number of LEDs of one column. Accordingly, there is a difference between the drive voltage VLED and the actual voltage drop VFL across the LED column, and this difference is loss of electric power. The more the number of LEDs in one column, the loss of electric power will become so large that it cannot be ignored.

In order to minimize the loss of electric power, it is desirable to measure the forwardvoltage drop VFL of each individual LED column, and determine the drive voltage VLED depending upon a maximum value among the measured VFL values. Therefore, the light source apparatus disclosed in the above prior art measures a voltage Vt across each of the switching transistors, so as to control the drive voltage VLED according to a minimum value among the measured voltages Vt. Since the switching transistor is connected in serial to the LED column, the total voltage drop across the whole column including the switching transistor is defined as VFL+Vt. Therefore, to control the drive voltage VLED according to the minimum value of the voltage Vt is to control the drive voltage VLED according to the maximum value of the voltage drop VFL.

Measuring the voltage drop VFL across each individual column permits checking the number of broken LEDs within each column on the basis of the measured values. As mentioned above, the average voltage drop $VF_{AVE}$ across one LED is known as an approximate value, it is possible to estimate an average voltage drop $VFL_{AVE}$ across one LED column in accordance with the number of LEDs constituting one column. The average voltage drop $VFL_{AVE}$ across one LED column is compared as a reference value to an actually measured voltage drop VFL across each individual column, to detect how many LEDs are broken within the individual column. For example, where three LEDs are connected in serial in a column, if the actually measured voltage drop VFL across one column is less than 2/3 of the average voltage drop $VFL_{AVE}$, one of the three LEDs is estimated to be broken.

In this way, measuring the voltage drop VFL across the individual LED column allows controlling the drive voltage VLED properly, and/or detecting failures of any LEDs. In the above mentioned prior art, the light source apparatus detects the voltage Vt across the individual switching transistor by connecting the LED columns through respective wirings to a voltage detection circuit.

According to Japanese Laid-open Patent Application No.5-212905 and Japanese Patent No.2936301, a voltage drop VFL across each LED column of a light source apparatus is measured by providing the LED column with a circuit element for the voltage detection, such as a diode or a photo-coupler.

However, for some application of the light source apparatus, there are cases where a large number of LEDs must be mounted at a high density on a substrate, so the pitch between the LEDs must be as small as possible. Wiring the LED columns individually for the voltage detection or providing them respectively with voltage detection elements, like in the above prior arts, will hinder manufacturing a high-density LED matrix, because the wirings or the voltage detection elements will occupy a certain area of the mounting surface of the substrate and also complicate the structure.

## SUMMARY OF THE INVENTION

In view of the foregoing, a primary object of the present invention is to provide a method of and an apparatus for measuring forward voltage drop across a semiconductor, especially a light emitting element, which is simple in structure and does not need to connect any complicated circuit member to each individual column of light emitting elements, and thus permits high-density mounting of the light emitting elements.

The present invention still has an object to provide a high-density light source apparatus using the inventive forward voltage drop measuring device, and also a direct thermal printer using such a light source apparatus.

To achieve the above and other objects in a method of measuring forward voltage drop in a semiconductor array that consists of a plural number of columns of semiconductors which are connected in serial to each other in each column, wherein the columns are connected in parallel to each other, the present invention provides the method with the following steps:

charging a capacitor that is connected in parallel to the columns of the semiconductors;
discharging the capacitor through a selected one of the columns; measuring a voltage across the capacitor at a time during the discharge of the capacitor or at a time of completion of the discharge; and
detecting a forward voltage drop across the selected column based on the measured voltage.

According to the present invention, in a measuring apparatus for measuring forward voltage drop in a light emitting element array that consists of a plural number of columns of light emitting elements which are connected in serial to each other in each column, wherein the columns are connected in parallel to each other, the measuring apparatus comprises:

a capacitor connected in parallel to the columns of the light emitting elements;
conductor switches for making selected ones of the columns of the light emitting elements conductive;
a power source circuit for supplying electric power to the capacitor and the columns of the light emitting elements;
a power switch for turning the light source circuit on and off; and
a measuring device that turns the power switch on to charge the capacitor and, thereafter, turns the power switch off and turns a selected one of the conductor switches on to make a corresponding one of the columns of the light emitting elements conductive, thereby to discharge the capacitor through the conductive column of the light emitting elements, wherein the measuring device measures a forward voltage drop across the conductive column based on a voltage across the capacitor that is measured at a time during the discharge of the capacitor or at a time of completion of the discharge.

A light source apparatus comprising a light emitting element array that consists of a plural number of columns of light emitting elements which are connected in serial to each other in each column, the columns being connected in parallel to each other, a power source circuit for supplying electric power to the columns of the light emitting elements, conductor switches respectively connected in serial to the columns of the light emitting elements, for making selected ones of the columns of the light emitting elements electrically conductive, the light source apparatus comprises:

a capacitor connected in parallel to the columns of the light emitting elements, the capacitor being charged with the electric power supplied from the power source circuit;
a power switch for switching the power supply from the light source circuit to the capacitor on and off; and
a measuring device that turns the power switch on to charge the capacitor and, thereafter, turns the power switch off and turns a selected one of the conductor switches on to make a corresponding one of the columns of the light emitting elements conductive, thereby to discharge the capacitor through the conductive column of the light emitting elements, wherein the measuring device measures a forward voltage drop across the conductive column based on a voltage across the capacitor, which is measured at a time during the discharge of the capacitor or at a time of completion of the discharge.

According to a preferred embodiment, the light source apparatus further comprises a device for determining a drive voltage for the columns of the light emitting elements based on forward voltage drop values across the columns which are measured by the measuring device.

According to another preferred embodiment, the light source apparatus further comprises a failure judgment device for determining based on forward voltage drop values measured by the measuring device what kind of failure the columns of the light emitting elements have.

The failure judgment device preferably makes selected ones of the columns of the light emitting elements conductive by turning corresponding ones of the conductor switches on, to discharge the capacitor through the selected conductive columns, and checks if any of the selected columns is faulty on the basis of a voltage across the capacitor that is measured at a time during the discharge of the capacitor or at the time of completion of the discharge. In this embodiment, when the failure judgment device judges that some of the selected columns is faulty, the failure judgment device determines the faulty column and judges the content of failure of the determined column on the basis of forward voltage drop values across individual ones of the selected columns.

According to a further preferred embodiment, the light emitting element array comprises a plural number of light groups, each of the light groups consisting of at least a main column of the light emitting elements and at least a backup column of the light emitting elements, so that when one of the main columns is judged to be faulty, one of the backup columns that belongs to the same light group as the faulty main column is turned on. Thus the light source apparatus can continue working even if any of the main column of the light emitting elements fails.

BRIEF DESCRIPTION OF THE DRAWINGS

The above and other objects and advantages will be more apparent from the following detailed description of the preferred embodiments when read in connection with the accompanied drawings, wherein like reference numerals designate like or corresponding parts throughout the several views, and wherein:

Figure 1 is a schematic diagram illustrating a color direct thermal printer according to an embodiment of the invention;
Figure 2 is an explanatory diagram illustrating a light emission surface of an optical fixing device;
Figure 3 is a graph showing a spectral curve of a light emitting element and a transmission curve of an optical filter;
Figure 4 is a block diagram illustrating a circuit for controlling the optical fixing device;
Figure 5 is a wave form chart illustrating wave forms of signals output during voltage drop measurement;
Figure 6 is a graph illustrating a curve of voltage across a capacitor during the voltage drop measurement;
Figure 7 is a flowchart illustrating a sequence of the voltage drop measurement;
Figure 8 is a table showing an example of judgment on failure within a column of LEDs based on a measured voltage drop value;
Figure 9 is a flowchart illustrating a sequence of failure judgment based on a measured voltage drop value;
Figure 10A is a graph illustrating a current-voltage curve of one LED column;
Figure 10B is a graph for explaining voltage drop measurement based on the current-voltage curve of Fig.10A;
Figure 11 is a graph for explaining voltage drop measurement based on a referential LED column;
Figure 12 is an explanatory diagram illustrating an optical fixing device wherein LEDs are staggered from each other;
Figure 13 is an explanatory diagram illustrating a fragment of a light source apparatus having light groups, each light group consisting of a main column of light emitting elements and a backup column of light emitting elements; and

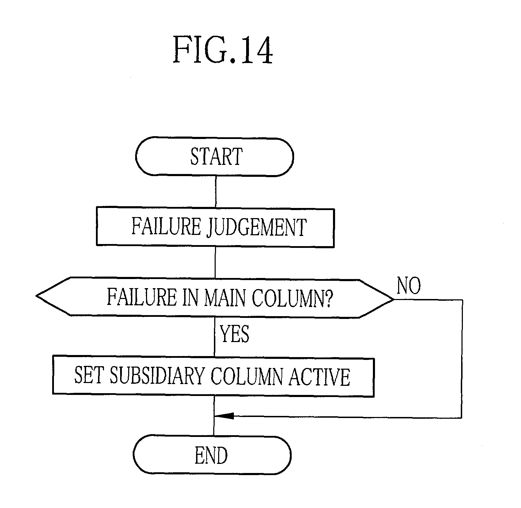

Figure 14 is a flowchart illustrating a sequence of how to deal with a failure in the light source apparatus shown in Fig. 13.

**DESCRIPTION OF THE PREFERRED EMBODIMENTS**

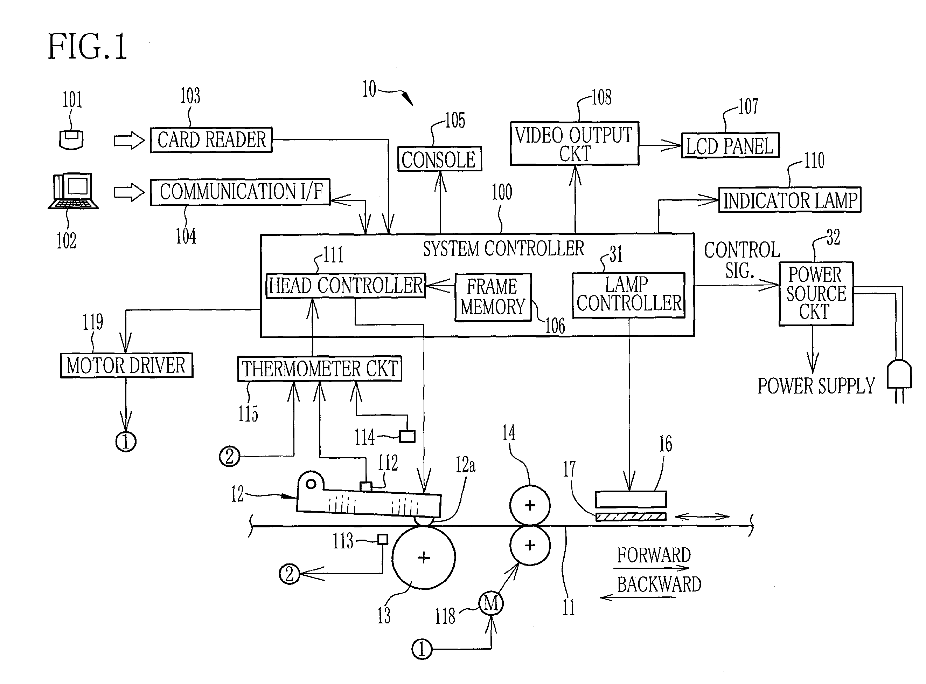

Fig.1 shows a color direct thermal printer 10 using a light source apparatus of the invention as a light source for an optical fixing device 16.

The thermal printer 10 reads image data from a memory card 101 storing data of images photographed by a digital camera or the like, or from a personal computer 102, to print images on color heat sensitive recording paper 11.

As well known in the art, the heat sensitive recording paper 11 has heat sensitive coloring layers for three colors formed atop another on a base sheet. The topmost coloring layer has the highest heat sensitivity and develops yellow with the lowest heat energy, whereas the bottommost coloring layer has the lowest heat sensitivity and develops cyan with the highest heat energy.

The topmost yellow coloring layer loses its coloring ability when exposed to yellow fixing light beams that are blue-violet rays having a light emission peak around 420 nm. The intermediate coloring layer that develops magenta loses its coloring ability when exposed to magenta fixing light beams that are near-ultraviolet rays having a light emission peak around 365 nm. The thermal printer 10 carries out thermal recording of a full-color image on the heat sensitive recording paper 11 while conveying the heat sensitive recording paper 11 forward and backward, and fixing the coloring layers optically.

A system controller 100 is constituted of CPU, ROM, RAM and other components, and controls the overall operation of the thermal printer 10 in accordance with command signals from a console 105. A card reader 103 reads image data from the memory card 101. A communication interface 104 consists of connectors for communication cables, a communication control circuit and the like, and is used for reading image data from the personal computer 102.

The image data read into the thermal printer 10 are stored in a frame memory 106. The thermal printer 10 is provided with a liquid crystal display (LCD) panel 107 to display previews of printed images, control menu screens and a variety of messages including instructions and alarms. A video output circuit 108 converts digital data, including the image data stored in the frame memory 106 and control menu data, into analog video signals, to output the video signals to the LCD panel 107. An indicator lamp 110 is a lamp for indicating ON-OFF conditions of a power source and operation modes of other parts of the thermal printer 10. A power source circuit 32 supplies power from a commercial power source to the respective parts of the thermal printer 10.

A thermal head 12 is disposed above a paper path of the heat sensitive recording paper 11, and a platen roller 13 is disposed across the paper path from the thermal head 12, so as to support the heat sensitive recording paper 11 from its back side. The thermal head 12 has a heating element array 12a consisting of a large number of heating elements aligned along amain scan direction that is equal to a widthwise direction of the heat sensitive recording paper 11. The heating element array 12a is pressed on the heat sensitive recording paper 11 to heat the coloring layers to develop the respective colors sequentially from the top to the bottom, so as sequentially to record yellow, magenta and cyan frames of one full-color image.

The system controller 100 is provided with a head controller 111 that controls the thermal head 12. The head controller 111 reads the image data line by line from the video output circuit 108, and produces drive data from the image data of one line, to send the drive data to the thermal head 12. Based on the drive data, the thermal head 12 is driven to generate heat energies of variable amounts from the respective heating elements in accordance with gradation levels of pixels of one line. The heat energies applied from the thermal head 12 make the heat sensitive recording paper 11 develop colors.

Coloring density of the heat sensitive recording paper 11 is dependent not only upon the heat energy generated from the heating element array 12a, but also such heat energy that is accumulated in the thermal head 12 or the platen roller 13, as well as atmospheric temperature inside the printer 10. For this reason, the thermal printer 10 is provided with temperature sensors 112, 113 and 114 for measuring the temperature of the thermal head 12, that of the platen roller 13 and the atmospheric temperature inside the thermal printer 10 respectively. Signals from these temperature sensors 112 to 114 are sent to a thermometer circuit 115. The thermometer circuit 115 converts the temperature signals from the respective sensors 112 to 114 into digital temperature data, to input them in the head controller 11. The head controller 111 corrects the image data based on the temperature data. Thereby, the heat energy generated from the heating element array 12a is controlled so as to make the heat sensitive recording paper 11 develop colors at proper densities.

A conveyer roller pair 14 and the optical fixing device 16 are placed behind the thermal head 12 in the forward direction of the paper path. The conveyer roller pair 14 nips and feeds the heat sensitive recording paper 11 in a sub scan direction that is equal to a lengthwise direction of the heat sensitive recording paper 11. As the heat sensitive recording paper 11 is fed in the sub scan direction, the heat sensitive recording paper 11 passes by the thermal head 12 and the optical fixing device 16, being subjected to the thermal recording and the optical fixing.

The conveyer roller pair 14 is driven by a drive motor 118. For example, the drive motor 118 is a stepping motor, and is connected through a motor driver 119 to the system controller 100. The system controller 100 controls the rotational amount and speed of the drive motor 118, thereby to control the transport length and speed of the heat sensitive recording paper 11.

The optical fixing device 16 illuminates the heat sensitive recording paper 11 with fixing light beams of specific wavelength ranges to fix the yellow and magenta heat sensitive coloring layers after having the respective color frames recorded therein by the thermal head 12. The optical fixing device 16 is controlled by a lamp controller 31 that is provided in the system controller 100.

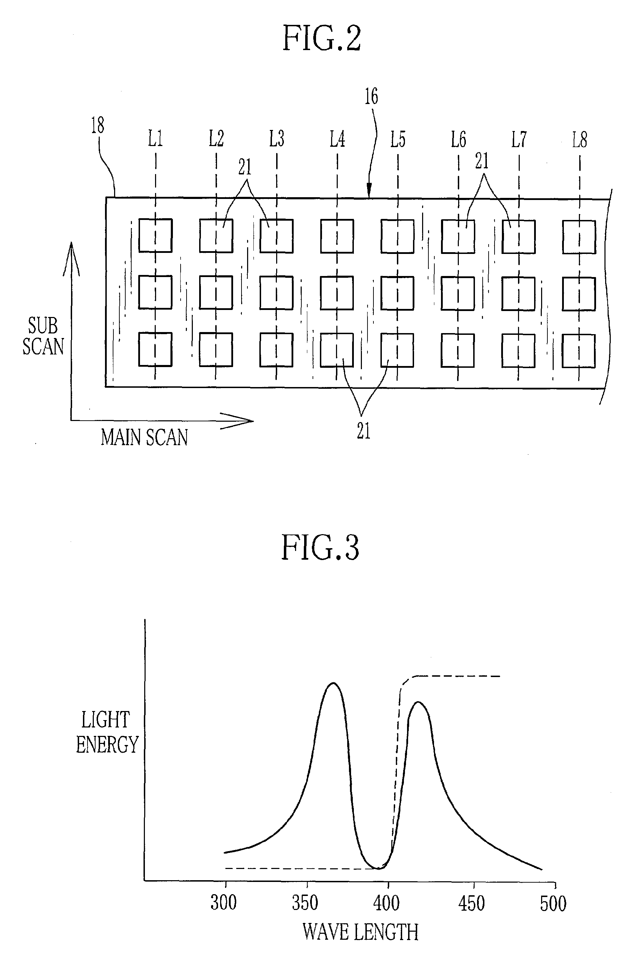

As shown in Fig. 2, the optical fixing device 16 is constituted of a substrate 18 with a circuit pattern, and a heating element array consisting of a plural number of LEDs 21 arranged in a matrix on the substrate 18. Three of these LEDs 21, which are aligned in the sub scan direction, are connected in serial to each other, constituting an LED column L, so a number "n" of LED columns L1 to Ln (n = a positive integer) are arranged side by side across the main scan direction. The LED columns L1 to Ln are connected in parallel to each other, and are turned on or off individually, i.e., independently from other LED columns. As described later, the thermal printer 10 has a VFL measuring mode for measuring the forward voltage drop VFL across the individual LED column. Based on the measured VFL values, the thermal printer 10 controls the drive voltage of the optical fixing device 16.

As shown by a solid line in Fig. 3, the LED 21 is a blue LED having light emission peaks around 365 nm and around 420 nm, so the light emitted from the LED 21 includes light beams for the magenta fixing (around 365 nm), and those for the yellow fixing (around 420 nm). A filter 17, see Fig.1, of the optical fixing device 16 is an ultraviolet cut filter for cutting light beams of lower wavelength range than 400 nm or so, that is, light beams in the ultraviolet range, as shown by dashed line in Fig.3. The filter 17 is movable into and out of an inserted position between the light emitting surface of the optical fixing device 16 and the paper path. During optical fixing of the yellow coloring layer, the filter 17 is moved to the inserted position. Then, among the light beams from the optical fixing device 16, those in the ultraviolet range, including the magenta fixing light beams, are cut by the filter 17, so merely the yellow fixing light beams are projected onto the heat sensitive recording paper 11. As a result, only the yellow coloring layer is optically fixed, without the magenta coloring layer being optically fixed before the recording.

For the optical fixing of the magenta coloring layer, the filter 17 is retracted from the front of the light emission surface of the optical fixing device 16, so the yellow fixing light beams as well as the magenta fixing light beams are projected onto the heat sensitive recording paper 11. Since the yellow coloring layer is already fixed before the magenta fixing process, it is no problem to project the yellow fixing light beams to the heat sensitive recording paper 11.

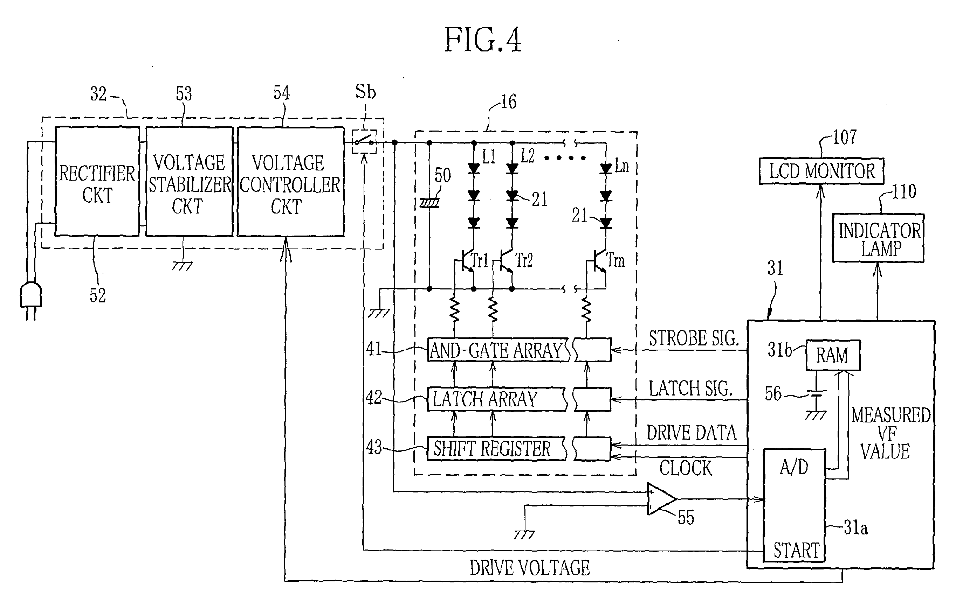

Fig.4 shows an electric circuit of the thermal printer 10. The optical fixing device 16 is connected to the lamp controller 31 and the power source circuit 32. The LED columns L1 to Ln are respectively provided with transistors Tr1 to Trn which are served as conductor switches for making the LED columns L1 to Ln individually conductive. The transistors Tr1 to Trn are respectively connected in serial to the LEDs 21 of the corresponding LED columns. The lamp controller 31 turns the transistors Tr1 to Trn individually on and off, to control lightening of the LEDs 21 separately from one column to another. These transistors Tr1 to Trn are constant current sources that make use of a not-shown current mirror circuit, so that they may flow a constant current independently of the voltage from the power source circuit 32.

Output terminals of the AND gate array 41 are connected to base terminals of the transistors Tr1 to Trn respectively. The LED columns L1 to Ln are individually driven by pulse signals that are generated periodically. The lamp controller 31 outputs a strobe signal to the AND gate array 41, to define a maximum lightening frequency of the individual LED columns L1 to Ln. The strobe signal is a pulse signal consisting of a series of pulses each having a predetermined pulse width and generated at predetermined intervals. The strobe signal defines a maximum number of times of lightening of the individual LED columns L1 to Ln during a period of the heat sensitive recording paper 11 being advanced by a length corresponding to one line, and also defines the length of lightening time per one pulse. Input terminals of the AND gate array 41 are respectively connected through a latch array 42 to a shift register 43. The lamp controller 31 controls individual lightening frequencies of the LED columns L1 to Ln by outputting drive data individually to the LED columns L1 to Ln.

The drive data are binary data having binary values "1" and "0", and are output in accordance with the pulse interval of the strobe signal. The drive data for all of the LED columns L1 to Ln are input in serial to the shift register 43 in synchronism with a clock signal. The drive data for each LED column are shifted inside the shift register 43 to be converted into parallel drive data. The parallel drive data are transferred to the latch array 42 in synchronism with the clock signal. The latch array 42 holds the transferred drive data. The drive data held in the latch array 42 are input in the AND gate array 41 in synchronism with a latch signal. The AND gate array 41 outputs a high level signal H as long as the drive data is "1" during a high level period of the strobe signal. Upon receipt of the high level signal H from the AND gate array 41, the transistors Tr1 to Trn are individually turned on to activate the LEDs 21 of the associated LED column L1 to Ln. So long as the drive data is "0", the AND gate array 41 outputs a low level signal L, so the corresponding ones of the transistors Tr1 to Trn are not turned on, and the corresponding ones of the LED columns L1 to Ln are not activated. The lamp controller 31 controls the lightening frequency of the LED columns each individually by varying the drive data for the LED columns from one another.

Controlling the lightening frequency of each of the LED columns L1 to Ln individually permits correcting lightening intensity, or called illuminance, of the individual LED columns L1 to Ln to equalize the distribution of illuminance across the main scan direction. Variations in illuminance between the LED columns L1 to Ln may be detected in an inspection process before the shipping, or by use of not-shown illuminance sensors that may be disposed in the vicinity of the optical fixing device or directly on the optical fixing device, so as to detect the respective illuminances of the LED columns L1 to Ln. The lamp controller 31 corrects the unevenness of illuminance by controlling the lightening frequency of the LED columns L1 to Ln on the basis of measured actual illuminances of the LED columns L1 to Ln.

A capacitor 50 is connected in parallel to the LED columns L1 to Ln, and also to the power source circuit 32. The power source circuit 32 consists of a switch Sb, a rectifier circuit 52, and a voltage stabilizer circuit 54. The switch Sb is a power switch for connecting or breaking the power supply circuit. The switch Sb is continually closed during the printing mode, and is turned on and off by the lamp controller 31 during the forward voltage drop (VFL) measuring mode, so as to measure respective voltage drop values VFL1 to VFLn across the LED columns L1 to Ln.

One terminal of the capacitor 50 is connected to a non-inverted input of a buffer amplifier 55, and an inverted input of the buffer amplifier 55 is grounded. The buffer amplifier 55 is served for detecting voltage across the capacitor 50, and amplifies the voltage across the capacitor 50 at the non-inverted input, to output a VFL measuring section 31a of the lamp controller 31.

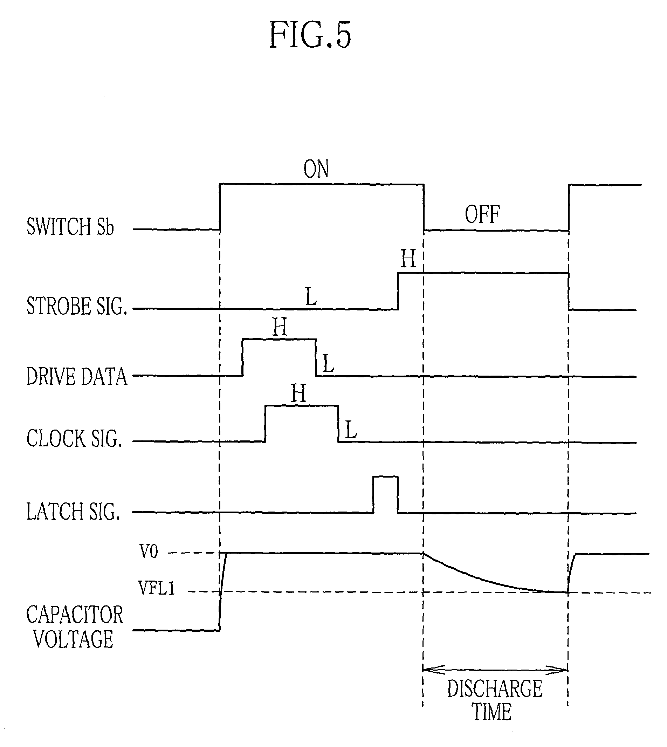

Fig.5 shows signals output during the VFL measuring mode. In the VFL measuring mode, the switch Sb is closed, i.e. turned ON, at first, to charge the capacitor 50. During the charging, all of the transistors Tr1 to Trn are maintained OFF. To measure the forward voltage drop VFL of the first LED column L1, the drive data for the first LED column L1 is set to "1", while the drive data for other LED column L2 to Ln are set to "0". These drive data are input in the shifter register 43. The drive data are transferred from the shift register 43 to the latch array 43 in synchronism with the clock signal. From the latch array 43, the drive data are input to the AND gate array 41 in synchronism with the latch signal. After the capacitor 50 is charged up, the strobe signal rises up to the high level, so the switch Sb is opened, i.e. turned OFF. Since the drive data for the first LED column L1 alone is "1", only the transistor Tr1 of the first LED column L1 is turned ON. Then, the capacitor 50 is discharged through the first LED column L1. The buffer amplifier 55 outputs the voltage across the capacitor 50 to the VFL measuring section 31a synchronously during the discharge of the capacitor 50.

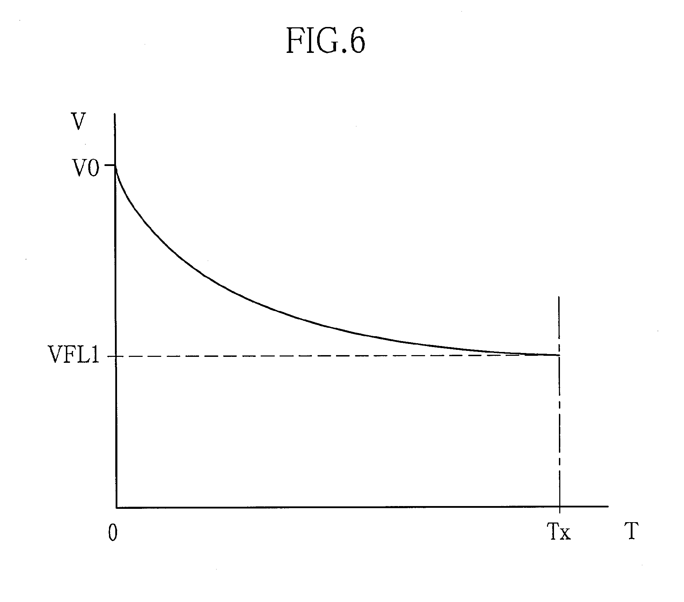

Fig.6 shows the curve of voltage across the capacitor 50 during its discharge. Assuming that the voltage V across the capacitor 50 is V = VO when the capacitor 50 is fully charged, i.e. immediately before the discharge, the voltage V gradually drops down as the result of discharge. When the discharge is completed in a time Tx, the voltage V stops decreasing. The voltage V at the completion of discharge is measured as the forward voltage drop VFL1 of the first LED column L1. As for each of other LED columns L2 to Ln, the respective forward voltage drop values VFL2 to VFLn are measured in the same way as for the first LED column L1. Once the capacitor 50 is charged, the voltage V of the capacitor 50 does not drop down to zero but stops at the individual forward voltage drop value VFL of the measured LED column. So the capacitor 50 is charged from this value VFL at the next charging.

The measured values VFL1 to VFLn are written on a RAM 31b. Designated by 56 is a backup battery for the RAM 31b. Thanks to the battery 56, data written on the RAM 31b are maintained while the printer 10 is off the power source. It is of course possible to supply the RAM 31b from the power source circuit 32 instead of the battery 56. The RAM 31b may also be replaced with EEPROM that need not being power-supplied for maintaining the stored data.

The lamp controller 31 selects the largest value among the measured values VFL1 to VFLn of the LED columns L1 to Ln, and determines the drive voltage VLED for the optical fixing device 16 depending upon the largest value. The drive voltage VLED is determined according to the following equation:

$$VLED = VFLmax + Vt + a \tag{1}$$

wherein VFLmax is the largest value among the measured values VFL2 to VFLn, Vt is a voltage drop across the transistor Tr, and a is a margin for constant current control. For example, a = 0. 5V.

The drive voltage VLED may be adjusted in the above described manner in the factory, and the adjusted value VLED may be used during the whole service life of the optical fixing device 16. However, because the forward drop voltage VFL tends to decrease with aging of the LEDs 21, it is preferable to measure the forward voltage values VFL1 to VFLn of the respective LED columns L1 to Ln and adjust the drive voltage VLED each time the printer 10 is powered on. Then, the optical fixing device 16 is driven by the drive voltage VLED that is adjusted appropriately in accordance with the variations in forward voltage drop value VFL, which are caused by the aging. Thus, loss of power as a result of aging can be minimized. Furthermore, the above configuration does not need to provide each LED column with any wiring or circuit member for measuring the forward voltage drop across each individual LED column. Moreover, the above configuration is so simple that it will not hinder high-density mounting of the LED 21.

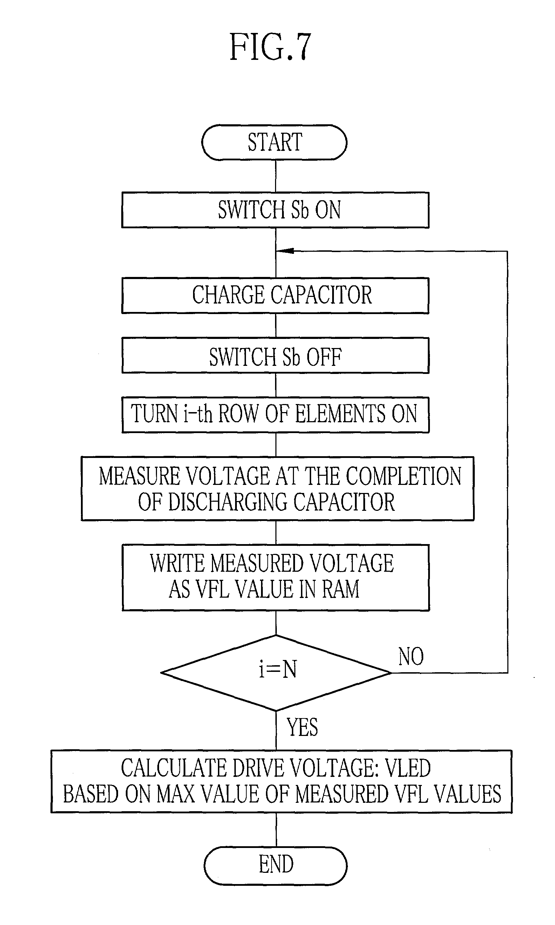

Now the operation of the above configuration will be described in accordance with the flowchart shown in Fig.7.

When being powered on, the printer 10 is activated in the VFL measuring mode, carrying out the VFL measurement. In the VFL measuring mode, the switch Sb is first turned ON to charge the capacitor 50, as shown in Fig.6. After the completion of charging the capacitor 50, the switch Sb is turned OFF, and only the transistor Tr1 connected to the first LED column L1 is turned ON. Then the capacitor 50 starts being discharged. The voltage V across the capacitor 50 is input synchronously to the VFL measuring section 31a, which measures the voltage V across the capacitor 50 when the discharge completion time Tx is over, and writes the measured voltage V as a forward voltage drop value VFL1 across the first LED column L1 on the RAM 31b. In the same way, respective forward voltage drop values VFL2 to VFLn across other LED columns L2 to Ln are measured and written on the RAM 31b. Based upon the largest value among the measured values VFL1 to VFLn, the drive voltage VLED is calculated according to the above equation.

At the end of the VFL measurement, the printer 10 moves to the printing mode, wherein a printing sequence starts upon a print command. First the heat sensitive recording paper 11 is fed out, and the thermal head 12 thermally reads an yellow frame of an image. The portion of the heat sensitive recording paper 11 having the yellow frame recorded therein is sent to the optical fixing device 16, to fix the yellow frame. During the yellow frame being fixed, the filter 17 is in the inserted position, so merely the yellow fixing light beams are projected onto the heat sensitive recording paper 11. Because the optical fixing device 16 is driven by the drive voltage VLED whose value is determined in the VFL measuring mode, loss of power is reduced. Since the illuminance of each LED column L1 to Ln of the optical fixing device 16 is individually corrected, the optical fixing is carried out without illuminance unevenness.

After the yellow fixing, the heat sensitive recording paper 11 is conveyed once in a backward direction till a recording start position of the heat sensitive recording paper 11 comes to the thermal head 12. Thereafter, the heat sensitive recording paper 11 is conveyed again in the forward direction while a magenta frame being recorded thereon.

During the backward movement of the heat sensitive recording paper 11, the filter 17 is moved to the retracted position. After the magenta frame is thermally recorded, the portion of the heat sensitive recording paper 11 having the yellow and magenta frames recorded thereon is successively fed to the optical fixing device 16, to fix the magenta frame optically. During the magenta fixing, the optical fixing device 16 is driven by the drive voltage VLED that is determined as above, like in the yellow fixing, so that the loss of electric power is reduced.

After the magenta fixing, the heat sensitive recording paper 11 is conveyed again in the backward direction. Thereafter, as the heat sensitive recording paper 11 is conveyed for the third time in the forward direction, a cyan frame is thermally recorded. In this way, the heat sensitive recording paper 11 has a full-color image consisting of the yellow, magenta and cyan frames recorded thereon and is then ejected.

In the above embodiment, the measured forward voltage drop values VFL1 to VFLn of the respective LED columns L1 to Ln are utilized for controlling the drive voltage VLED. It is also possible to use the measured forward voltage drop values VFL1 to VFLn for judging failure of any of the LED columns L1 to Ln.

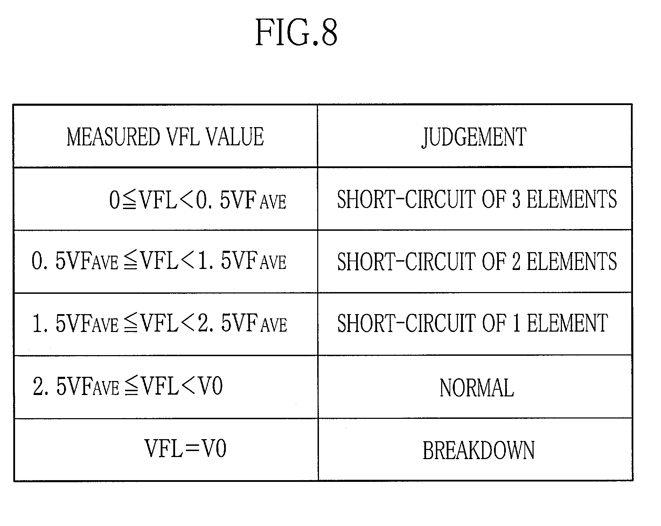

As Fig.8 shows, provided that $VF_{AVE}$ represents an average forward voltage drop of one LED 21, the forward voltage drop VFL of one LED column consisting of three normal LEDs will be about $3VF_{AVE}$. Accordingly, if the measured forward voltage drop VFL is not less than $2.5VF_{AVE}$ and less than the value VO (see Fig. 6), the LED column can be judged normal. If the measured forward voltage drop VFL is not less than $1.5VF_{AVE}$ and less than $2.5VF_{AVE}$, one of the three LEDs of the LED column is judged to be short-circuited. In the same way, if the measured forward voltage drop VFL is not less than $0.5VF_{AVE}$ and less than $1.5VF_{AVE}$, two of the three LEDs of the LED column are judged to be short-circuited. If the measured forward voltage drop VFL is not less than zero and less than $0.5VF_{AVE}$, all of the three LEDs of the LED column are judged to be short-circuited. If the forward voltage drop value VFL is kept in the value VO even after the discharging of the capacitor 50, it is judged that there is a breakdown in the optical fixing device 16.

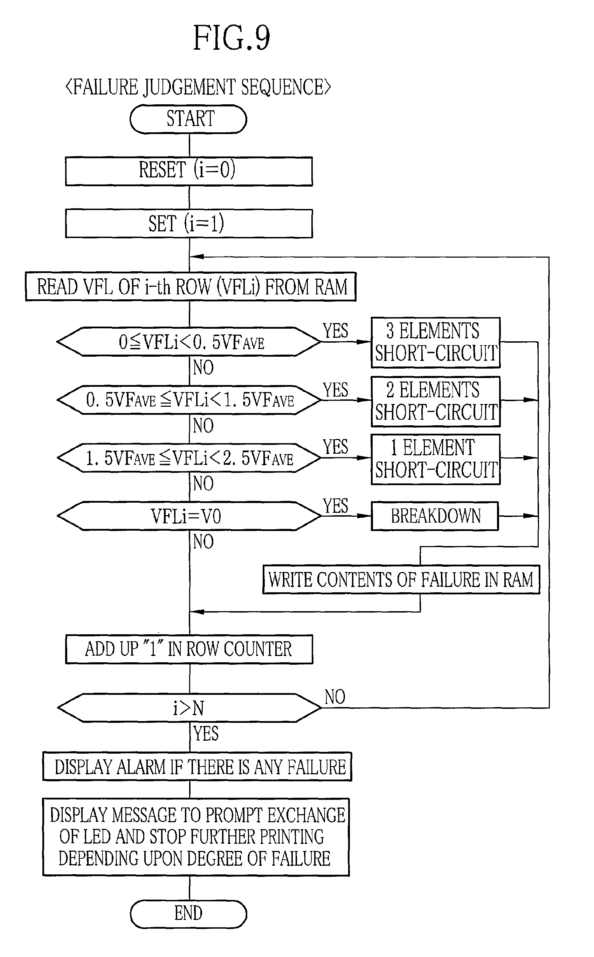

Fig.9 shows a flowchart showing the sequence of failure judgment on the optical fixing device 16. The lamp controller 31 first reset a column counter to zero. The lamp counter 31 counts the column number "i" of the LED columns, wherein i = 1 to n. After being reset to zero, the column counter is set to "1". Then the forward voltage drop value VFLi, i.e. the value VFL1 of the first LED column L1 this time, is read out from the RAM 31b. If the value VFLi is more than zero and less than $0.5VF_{AVE}$, it is judged that all of the three LEDs of the LED column Li in question are short-circuited. If the value VFLi is not less than $0.5VF_{AVE}$ and less than $1.5VF_{AVE}$, it is judged that two of the three LEDs of the LED column Li in question are short-circuited. If the value VFLi is not less than $1.5VF_{AVE}$ and less than $2.5VF_{AVE}$, it is judged that one of the three LEDs of the LED column Li in question are short-circuited. If the value VFLi = VO, the optical fixing device 16 is judged to have a breakdown. When any of the above failures is detected, the content of the detected failure is written on the RAM 31b,

After making the failure judgment on the first LED column L1, the lamp controller 31 adds "1" to the count of the column counter, and reads the forward voltage drop value VFL2 across the second LED column L2 from the RAM 31b, to make the failure judgment on the second LED column L2. In this way, the lamp controller 31 repeats the failure judgment sequence till it judges the failure on the last LED column Ln. After the failure judgment is accomplished on all of the LED columns L1 to Ln, if there are any LED columns on which some failures are detected, the LCD panel 107 is driven to display a message to notify the failures. Instead of or in addition to displaying the message, it is possible to notify the failures by lightening the indicator lamp 110.

Depending upon the degree of failure, if the printing process is continued without any mending, there is a case where the image cannot be printed at adequate quality due to lack of optical fixing light. Therefore, if the degree of failure exceeds a given threshold, for example, if two or more of the LEDs are short-circuited or the optical fixing device 16 has a breakdown, the lamp controller 31 displays a message to prompt exchange of the troubled LEDs 21 and stops the following printing process. Even if the degree of failure is below the given threshold, for example when only one LED is short-circuited, the illuminance of the optical fixing device 16 is inevitably lowered, so it is preferable to enhance the illuminance of the troubled LED column or ones around the troubled LED column so as to make up for the lowering of illuminance.

In the above embodiment, the forward voltage drop is measured with respect to each individual LED column, to judge the content of failure on each LED column. In alternative, it is possible to check first if there is any LED column with a failure among selected ones of the LED columns, and then judge the content of failure only when it is determined that at least one of the selected LED columns is faulty. Whether there is any faulty LED column or not can be determined by discharging the capacitor only once. If all of the selected LED columns are normal, it is unnecessary to execute the failure judgment on each of these LED columns. That is, only when it is needed, the judgment on the content of failure is carried out. Therefore, checking if the selected LED columns include one having a failure before executing the judgment on the content of failure with respect to the individual LED columns can save unnecessary time of measuring voltage drop across the normal LED columns. So this method improves the efficiency of failure judgment.

For this method, the lamp controller charges the capacitor and then turns the conductor switches of a plural number of selected LED columns ON, to discharge the capacitor through these LED columns. Based on the voltage across the capacitor at the completion of discharging, it is determined whether any of the selected LED columns has a failure or not.

If the voltage V across the capacitor after the discharge is in the normal range of the forward voltage drop VFL shown in Fig.8, i.e. 2.5 $VF_{AVE}$ = V < VO, it can be held that all of the selected LED columns are normal. If the voltage V across the capacitor is less than the normal range, at least one of the selected LED columns is judged to be faulty, though it cannot be determined which one is faulty. Furthermore, in the same way as described with respect to Fig. 8, it is possible to determine how many LEDs are short-circuited within the faulty LED column. For example, when 1.5 $VF_{AVE}$ = V < 2.5 $VF_{AVE}$, one of the LEDs is determined to be short-circuited. When 0 = V < 0.5 $VF_{AVE}$, all of the three LEDs are determined to be short-circuited. When the voltage V is maintained at the level VO, all of the selected LED columns are determined to be broken down.

If any of the selected LED columns are determined to be faulty, the forward voltage drop across each of the selected LED columns is measured to determine which one is faulty, and what kind of failure the faulty LED column has. The number of LED columns to be selected at once for the failure judgment is not limited, but it is possible to select all of the LED columns, or divide the LED columns into several groups, to select the LED columns group by group.

The failure judgment is carried out for example each time the printer is powered on. But it is of course possible to carry out the failure judgment in response to a command for the judgment from the console, or at predetermined intervals, or when the total time of lightening reaches a predetermined length, or at the timing of more than one of these occasions.

In addition, it is possible to grasp tendency of lifespan of the LED 21 by storing measured forward voltage drop VFL of each LED column as a record in association with the date of measurement. For example, comparing the record of the VFL values with data on the use of the optical fixing device 16, e.g. the number of times of lightening, will lead to grasping a rough tendency of reduction in the VFL values with respect to how many times the optical fixing device 16 lightens. Then it becomes possible to estimate the aging speed of the LED 21, and predict the time to exchange the LED 21.

Furthermore, the measured VFL values may be utilized for detecting failure and aging condition of the individual LED columns. Because the failure and aging will cause unevenness in illuminance, it is possible to correct the unevenness based on the respective VFL values of the LED columns.

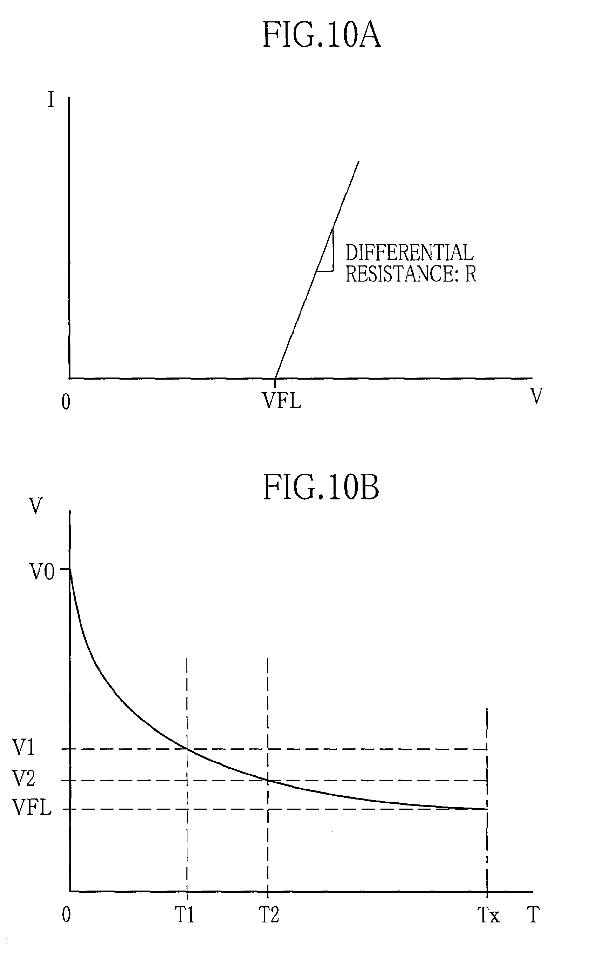

Although the VFL value is measured when the time Tx has elapsed since the beginning of discharge, that is, at the time of completion of the discharge, it is possible to measure the voltage V across the capacitor at an appropriate time Tn, to detect the VFL value. Specifically, a current I through one LED column and the voltage V applied to this LED column have a relationship that can approximate to a characteristic curve of Fig. 10A, wherein the current I starts flowing through the LED column when the applied voltage V reaches the forward voltage drop value VFL, and increases linearly as the voltage V increases, with an inclination of differential resistance R. Through this approximation, the curve of voltage being discharged from the capacitor, as shown in Fig. 10B, can approximate to a discharging function that has a time constant between the differential resistance R and a capacitance C of the capacitor 50.

Concretely, provided that the voltage V reaches a value V1 in a time T1 from the start of discharging, and reaches a value V2 in a time T2 from the start of discharging, these values V1, T1, V2 and T2 may be expressed by the following equations:

$$V1 - VFL = (VO - VFL) \cdot \exp(-T1/C \cdot R) \tag{2}$$

$$V2 - VFL = (VO - VFL) \cdot \exp(-T2/C \cdot R) \tag{3}$$

Dividing both sides of the equation (2) by the corresponding sides of the equation (3) will provide the following equation:

$$(V1 - VFL)/(V2 - VFL) = \exp \cdot ((T2-T1)/C \cdot R) \tag{4}$$

Solving the equation (4) for the VFL value will provide the following equation:

$$VFL = \{V1-V2 \cdot \exp((T2-T1)/C \cdot R)\}/\{1-\exp \cdot ((T2-T1)/C \cdot R)\} \tag{5}$$

Because V1=VO when T1=0 , the equation (5) may be transformed to the following equation:

$$VFL=\{VO - V2\cdot exp((T2)/C\cdot R)\}/\{1 - exp\cdot(T2/C\cdot R)\} \tag{6}$$

If the capacitance C of the capacitor 50 and the differential resistance R of the LED column are known, it is possible to obtain an approximation to the VFL value from the equation (6) by measuring a voltage value V2 at an appropriate time T2 from the start of discharging, that is shorter than the time Tx necessary for the completion of discharging.

Alternatively, a referential LED column Lref whose VFL value is known, may be connected in parallel to the LED columns L1 to Ln. Then, once a voltage Vr of the capacitor discharged through the referential LED column Lref is measured at the appropriate time T2 from the start of discharge through the referential LED column Lref, it becomes possible to detect the VFL value of each LED column, even if the differential resistance R of that LED column is unknown.

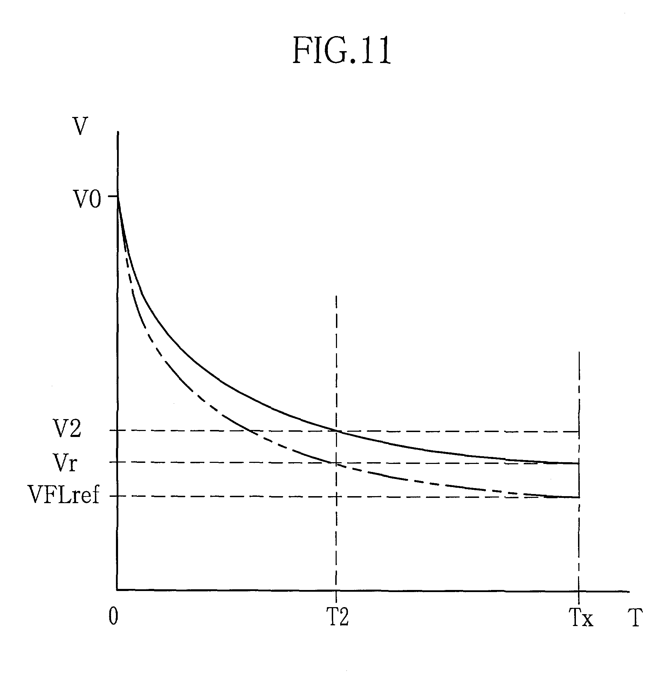

Referring to Fig.11, provided that V2 and Vr represent a voltage across an LED column L in question and a voltage across the referential LED column Lref respectively, at the appropriate time T2 from the start of discharge, and VFLref represents the known forward voltage drop value across the referential LED column Lref, the following equations may be given:

$$V2 - VFL = (VO - VFL)\cdot exp(-T2/C\cdot R) \tag{7}$$

$$Vr - VFL = (VO - VFLref)\cdot exp(-T2/C\cdot R) \tag{8}$$

By obtaining natural logarithms on both sides of the above equations (7) and (8), the following equations are provided:

$$1n(V2 - VFL) = 1n(VO - VFL) - T2/C\cdot R \tag{9}$$

$$1n(Vr - VFL) = 1n(VO - VFLref) - T2/C\cdot R \tag{10}$$

From the above equation (10) is derived the following equation:

$$T2/C\cdot R = 1n(VO - VFLref) = 1n(Vr - VFL) \tag{11}$$

The equation (11) may be substituted for the equation (9) and processed in the following manner:

$$1n(V2 - VFL) - 1n(VO - VFL) = 1n(Vr - VFLref) - 1n(VO - VFLref)$$

$$\therefore$$

$$(V2 - VFL)/(VO - VFL) = (Vr - VFLref)/(VO - VFLref) \tag{12}$$

Provided that (Vr - VFLref)/(VO - VFLref) = Q, the VFL value may be solved for according to the following equation:

$$VFL = (V2 - Q\cdot VO)/(1 - Q) \tag{13}$$

Accordingly, just measuring the voltage Vr across the referential LED column Lref permits deriving the VFL value of the LED column L in question by use of the equation (13).

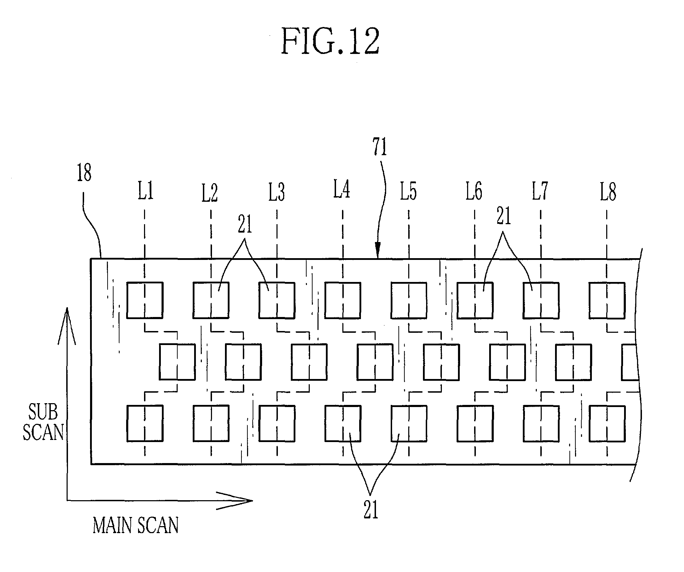

Although the LEDs 21 of each column are aligned along the sub scan direction in the embodiment shown in Fig.2, the LEDs consisting of one column may be arranged in another pattern insofar as they are electrically connected in serial to each other. As shown for example in Fig. 12, an optical fixing device 71 may has a light emitting element array that consists of LEDs 21 which are staggered from each other. In this embodiment, among the LEDs 21 arranged in three rows that extend in the main scan direction, the LEDs 21 of the second row are placed in opposition to respective spaces between LEDs 21 of the adjacent rows, i.e. the first and third rows. Thereby, the LEDs 21 of the light emitting element array are staggered from each other. This arrangement prevents uneven illuminance in the main scan direction because the individual LEDs 21 make up for illuminance reductions due to the spaces between the LEDs 21 of the adjacent rows.

It is to be noted that the number of LEDs connected in serial into a column, as well as the number of rows, is not to be limited to three, but may vary appropriately.

Although the light source apparatus of the present invention is used as the optical fixing device of the thermal printer in the above embodiment, the light source apparatus is applicable not only to the optical fixing device but also to a display, a backlight for a liquid crystal display, an illumination device, a signal light, a warning device like a strap lamp for a vehicle, and the like.

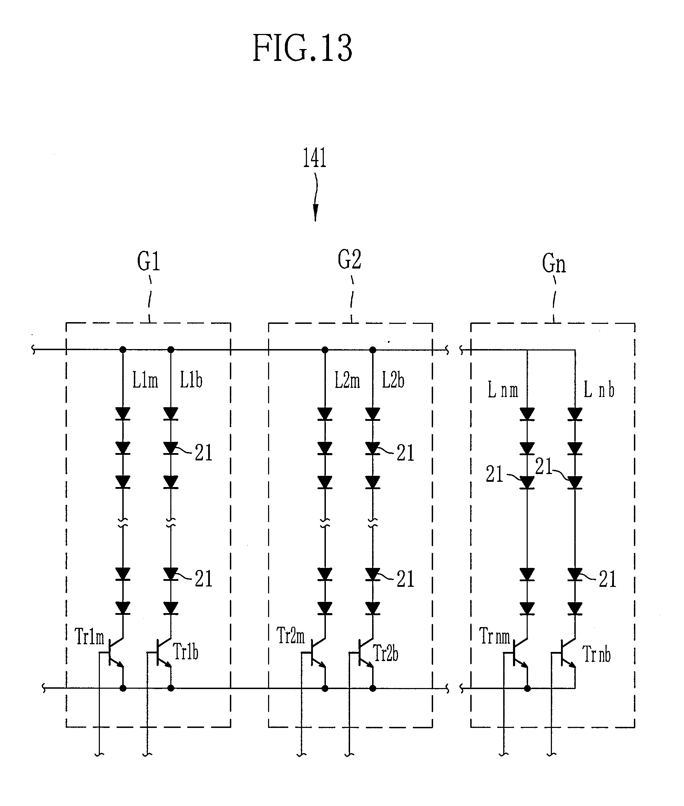

In the above embodiment, if the degree of failure in any of the LED columns is serious, the light source apparatus is deactivated, that is, the printing process is interrupted. However, in some applications, for example where the light source apparatus is used as a signal light, it is not allowed to stop the operation. In that case, it is preferable to provide backup LED columns in addition to main LED columns in one to one relationship, as shown in Fig. 13, so if any of the main LED columns is faulty, the corresponding backup LED column is turned ON.

A light source apparatus 141 shown in Fig.13 is provided with a plural number of light groups G1 to Gn. Each of the light groups G1 to Gn consists of a main LED column Lnm and a backup LED column Lnb, wherein n = a positive integer. The main LED columns L1m to Lnm are usually activated, whereas the backup LED columns L1b to Lnb are used for emergency sake, i.e. when some failure occurs in the main LED columns L1m to Lnm. These LED columns are connected in parallel to each other, regardless of whether they are main or backup. As for physical layout, the main and backup LED columns of one light group are spaced from each other at a narrower pitch than a pitch between the light groups. Because the backup LED column is to be used as a backup or substitute for the main LED column of the same light group, it is preferable to place the backup LED column as close to the main LED column as possible within each light group.

In this embodiment, a lamp controller executes failure judgment on the main LED column of each light group in the same way as described above. If there is a failure in any of the main LED columns, the backup LED column of the same light group is set active.

Although the light group consists of one main LED column and one backup LED column in the embodiment shown in Fig. 13, each light group may be constituted of two or more main LED columns and two or more backup LED columns.

The forward voltage drop measuring method and apparatus of the present invention is useful for measuring forward voltage drop across any kind of semiconductor, including the light emitting element.

Thus the present invention is not to be limited to the above embodiments but, on the contrary, various modifications will be possible without departing from the scope and spirit of the present invention as specified in claims appended hereto.

**Claims**

1. A forward voltage drop measuring method of measuring forward voltage drop in a semiconductor array that consists of a plural number of columns (L1 to Ln) of semiconductors (21) which are connected in serial to each other in each column, wherein said columns are connected in parallel to each other, said method comprising steps of:

   charging a capacitor (50) that is connected in parallel to said columns of said semiconductors;
   discharging said capacitor through a selected one of said columns; measuring a voltage across said capacitor at a time (T2) during the discharge of said capacitor or at a time (Tx) of completion of the discharge; and detecting a forward voltage drop (VFL) across said selected column based on said measured voltage.

2. A forward voltage drop measuring method as claimed in claim 1, wherein said semiconductors include light emitting elements.

3. A measuring apparatus for measuring forward voltage drop in a light emitting element array that consists of a plural number of columns (L1 to Ln) of light emitting elements (21) which are connected in serial to each other in each column, wherein said columns are connected in parallel to each other, said measuring apparatus comprising:

   a capacitor (50) connected in parallel to said columns of said light emitting elements;
   conductor switches (Tr1 to Trn) for making selected ones of said columns of said light emitting elements conductive;

a power source circuit (32) for supplying electric power to said capacitor and said columns of said light emitting elements;

a power switch (Sb) for turning said light source circuit on and off; and

a measuring device (31a) that turns said power switch on to charge said capacitor and, thereafter, turns said power switch off and turns a selected one of said conductor switches on to make a corresponding one of said columns of said light emitting elements conductive, thereby to discharge said capacitor through said conductive column of said light emitting elements, wherein said measuring device measures a forward voltage drop (VFL) across said conductive column based on a voltage across said capacitor that is measured at a time (T2) during the discharge of said capacitor or at a time (Tx) of completion of the discharge.

4. A measuring apparatus as claimed in claim 3, wherein said conductor switches are transistors connected respectively in serial to said columns of said light emitting elements.

5. A light source apparatus comprising a light emitting element array that consists of a plural number of columns (L1 to Ln) of light emitting elements (21) which are connected in serial to each other in each column, said columns being connected in parallel to each other, a power source circuit (32) for supplying electric power to said columns of said light emitting elements, conductor switches (Tr1 to Tn) respectively connected in serial to said columns of said light emitting elements, for making selected ones of said columns of said light emitting elements electrically conductive, said light source apparatus comprising:

a capacitor (50) connected in parallel to said columns of said light emitting elements, said capacitor being charged with the electric power supplied from said power source circuit;

a power switch (Sb) for switching the power supply from said light source circuit to said capacitor on and off; and

a measuring device (31a) that turns said power switch on to charge said capacitor and, thereafter, turns said power switch off and turns a selected one of said conductor switches on to make a corresponding one of said columns of said light emitting elements conductive, thereby to discharge said capacitor through said conductive column of said light emitting elements, wherein said measuring device measures a forward voltage drop (VFL) across said conductive column based on a voltage across said capacitor, which is measured at a time (T2) during the discharge of said capacitor or at a time (Tx) of completion of the discharge.

6. A light source apparatus as claimed in claim 5, further comprising a device for determining a drive voltage for said columns of said light emitting elements based on forward voltage drop values across said columns which are measured by said measuring device.

7. A light source apparatus as claimed in claim 5, further comprising a failure judgment device for determining based on forward voltage drop values measured by said measuring device what kind of failure said columns of said light emitting elements have.

8. A light source apparatus as claimed in claim 7, wherein said failure judgment device makes selected ones of said columns of said light emitting elements conductive by turning corresponding ones of said conductor switches on, to discharge said capacitor through said selected conductive columns, and checks if any of said selected columns is faulty on the basis of a voltage across said capacitor that is measured at a time during the discharge of said capacitor or at the time of completion of the discharge.

9. A light source apparatus as claimed in claim 8, wherein when said failure judgment device judges that some of said selected columns is faulty, said failure judgment device determines said faulty column and judges the content of failure of said determined column on the basis of forward voltage drop values across individual ones of said selected columns.

10. A light source apparatus as claimed in claim 7, wherein said failure judgment device carries out the failure judgment at each power-on time, and/or in response to a command requiring the failure judgment, and/or at predetermined intervals, and/or when a total lightening time of said light source apparatus reaches a predetermined length.

11. A light source apparatus as claimed in claim 7, wherein said light emitting element array comprises a plural number of light groups (G1 to Gn), each of said light groups consisting of at least a main column of said light emitting elements and at least a backup column of said light emitting elements, so that when one of said main columns is judged to be faulty, one of said backup columns that belongs to the same light group as said faulty main column is turned on.

**12.** A direct thermal printer that heats up heat sensitive recording paper (11) to record an image thermally thereon, and comprises a light source apparatus (16) for projecting fixing light beams onto said heat sensitive recording paper to fix an image recorded thereon, wherein said light source apparatus comprises:

a light emitting element array that consists of a plural number of columns (L1 to Ln) of light emitting elements (21) which are connected in serial to each other in each column, said columns being connected in parallel to each other;
a power source circuit (32) for supplying electric power to said columns of said light emitting elements;
conductor switches (Tr1 to Trn) respectively connected in serial to said columns of said light emitting elements, for making selected ones of said columns of said light emitting elements conductive; a capacitor (50) connected in parallel to said columns of said light emitting elements, said capacitor being charged with the electric power supplied from said power source circuit;
a power switch (Sb) for switching the power supply from said light source circuit to said capacitor on and off; and
a measuring device (31a) that turns said power switch on to charge said capacitor and, thereafter, turns said power switch off and turns a selected one of said conductor switches on to make a corresponding one of said columns of said light emitting elements conductive, thereby to discharge said capacitor through said conductive column of said light emitting elements, wherein said measuring device measures a forward voltage drop (VFL) across said conductive column based on a voltage across said capacitor, which is measured at a time (T2) during the discharge of said capacitor or at a time (Tx) of completion of the discharge.

# FIG.1

# FIG.2

# FIG.3

# FIG.4

# FIG.5

# FIG.6

# FIG.7

```
              ┌─────────┐
              │  START  │
              └─────────┘
                   │
        ┌──────────────────────┐
        │     SWITCH Sb ON      │
        └──────────────────────┘
                   │
                   │  ◄─────────────────────┐
        ┌──────────────────────┐            │
        │   CHARGE CAPACITOR    │            │
        └──────────────────────┘            │
                   │                         │
        ┌──────────────────────┐            │
        │     SWITCH Sb OFF     │            │
        └──────────────────────┘            │
                   │                         │
        ┌──────────────────────────┐        │
        │ TURN i-th ROW OF ELEMENTS ON │     │
        └──────────────────────────┘        │
                   │                         │
   ┌───────────────────────────────────┐    │
   │ MEASURE VOLTAGE AT THE COMPLETION   │   │
   │     OF DISCHARGING CAPACITOR        │   │
   └───────────────────────────────────┘    │
                   │                         │
        ┌──────────────────────┐            │
        │  WRITE MEASURED VOLTAGE │          │
        │   AS VFL VALUE IN RAM   │          │
        └──────────────────────┘            │
                   │                         │
                  ◇                          │
             ╱    i=N    ╲    NO             │
             ╲           ╱ ───────────────────┘
                  ◇
                   │ YES
   ┌──────────────────────────────────────────┐
   │     CALCULATE DRIVE VOLTAGE: VLED          │
   │ BASED ON MAX VALUE OF MEASURED VFL VALUES  │
   └──────────────────────────────────────────┘
                   │
              ┌─────────┐
              │   END   │
              └─────────┘
```

# FIG.8

| MEASURED VFL VALUE | JUDGEMENT |
|---|---|
| $0 \leqq VFL < 0.5VF_{AVE}$ | SHORT-CIRCUIT OF 3 ELEMENTS |
| $0.5VF_{AVE} \leqq VFL < 1.5VF_{AVE}$ | SHORT-CIRCUIT OF 2 ELEMENTS |
| $1.5VF_{AVE} \leqq VFL < 2.5VF_{AVE}$ | SHORT-CIRCUIT OF 1 ELEMENT |
| $2.5VF_{AVE} \leqq VFL < V0$ | NORMAL |
| $VFL = V0$ | BREAKDOWN |

# FIG.9

〈FAILURE JUDGEMENT SEQUENCE〉

START

RESET (i=0)

SET (i=1)

READ VFL OF i-th ROW (VFLi) FROM RAM

$0 \leqq VFLi < 0.5VF_{AVE}$ — YES → 3 ELEMENTS SHORT-CIRCUIT

NO

$0.5VF_{AVE} \leqq VFLi < 1.5VF_{AVE}$ — YES → 2 ELEMENTS SHORT-CIRCUIT

NO

$1.5VF_{AVE} \leqq VFLi < 2.5VF_{AVE}$ — YES → 1 ELEMENT SHORT-CIRCUIT

NO

$VFLi = V0$ — YES → BREAKDOWN

NO

WRITE CONTENTS OF FAILURE IN RAM

ADD UP "1" IN ROW COUNTER

$i > N$ — NO

YES

DISPLAY ALARM IF THERE IS ANY FAILURE

DISPLAY MESSAGE TO PROMPT EXCHANGE OF LED AND STOP FURTHER PRINTING DEPENDING UPON DEGREE OF FAILURE

END

# FIG.10A

# FIG.10B

# FIG.11

# FIG.12

# FIG.13

# FIG.14

```
        ┌─────────────┐
        │    START    │
        └──────┬──────┘
               │
    ┌──────────┴──────────┐
    │  FAILURE JUDGEMENT  │
    └──────────┬──────────┘
               │
    ╱──────────┴──────────╲        NO
   ╱  FAILURE IN MAIN COLUMN?  ╲────────┐
    ╲──────────┬──────────╱             │
               │ YES                    │
    ┌──────────┴──────────────┐         │
    │ SET SUBSIDIARY COLUMN ACTIVE │    │
    └──────────┬──────────────┘         │
               │◄───────────────────────┘
        ┌──────┴──────┐
        │     END     │
        └─────────────┘
```